# EUROPEAN PATENT SPECIFICATION

(11) **EP 0 933 647 B1**
(45) Date of publication and mention of the grant of the patent: **01.12.2004**
(21) Application number: 97933927.2
(22) Date of filing: 11.07.1997
(51) Int. Cl.: G01S 13/02, G01S 7/288, G01S 13/24

(54) **Pulse radar system**
Pulsradarsystem
Système de radar pulsé

(30) Priority: 15.10.1996 RU 96120661
(43) Date of publication of application: 04.08.1999
(73) Proprietor: Zybin, Mikhail Nikolaevich, Moscow, 103062 (RU)
(72) Inventor: Zybin, Mikhail Nikolaevich, Moscow, 103062 (RU)
(74) Representative: W.P. Thompson & Co.
(86) International application number: PCT/RU1997/000220
(87) International publication number: WO 1998/016845

(56) References cited:
- EP-A- 0 276 885
- FR-A- 2 336 689
- SU-A- 1 820 346
- US-A- 3 358 282
- US-A- 3 996 558
- US-A- 4 001 825
- US-A- 4 071 844
- US-A- 4 330 760
- US-A- 4 538 149

## Description

The invention relates to a pulse radar technique and, more specifically, to radar system designs which may be used in radar systems for aviation, sea and river transport, other transport means, as well as for mapping the earth's surface, meteorological, ecological, other atmospheric system, and similar applications. It is most pertinent to use this invention in the ground apparatus of small and medium sized aerodromes and in the navigation apparatus of aircraft. This type of navigation apparatus can be designed for operating in adverse conditions such as at fires, in mountain area or in fog or low clouds.

It is known to construct pulse radar systems on the basis of frequency-agile magnetrons, using the tracking of a resonant frequency of a magnetron oscillating system ("cold frequency" of magnetron) during the pause between pulses. For example, the radar system constructed on the basis of the magnetron YJ 1172 Philips Corporation (prospectus "Pulsed Magnetron X-band YJ 1172" or "Frequency Agility Packages") comprises such a frequency-agile magnetron which receives a signal from a low power source (a local oscillator) tuned by a varactor scheme. During the pause between pulses, the tracking of a magnetron frequency is fulfilled by superimposing a signal, having a frequency of 4 Mhz, on the tuning voltage of said low power source and measuring the phase of the resulting signal coming from a tracking detector after its reflection by the magnetron.

Coarse tuning of the frequency of the local oscillator begins with a synchronizing pulse of about 1 µs before the magnetron generates its pulse. Precise tuning of the frequency of that oscillator is fulfilled in the process of generating the magnetron pulse

That particular radar construction allows a local oscillator to be set at a frequency providing an intermediate frequency of a receiver rather precisely, if the intermediate frequency of the receiver is similar to the difference between the "cold frequency" of the magnetron in the pause between pulses and the frequency of the signal, generated by the magnetron.

However, this construction does not enable operation of the radar system for predetermined frequencies of any pulse, especially for high destabilizing factors and changes of tuning frequency rate in the operation process. This leads to a limitation of information from the radar system, a decrease of its frequency agility and a reduction of the reliability of the radar system.

In addition, the necessity for fast tuning of frequency during the pause between pulses does not permit the use of the most stable, fixed frequency local oscillators. The system of tuning of frequency by the use of the additional source of the 4 Mhz signal, and the measuring of the phase of the resultant signal after a tracking detector makes the construction of the radar system much more complicated and its operation less reliable because of additional possible defects in the system of tracking and tuning.

Another important defect of the aforegoing construction is that it is impossible to realize operation at one or a few frequencies fixed with high accuracy, if vibration and other destabilizing factors induce changes in the magnetron frequency.

This further decreases the universality and the reliability of that radar system.

From US-A-4538149, there is a known system for utilizing frequency agile magnetron radars to perform one, two and three dimensional target imaging using coherent frequency agile radar waveforms. The system includes a frequency agile magnetron, with a modulator forming triggering pulses for the magnetron. The pulses from the frequency agile magnetron are controlled so that their frequencies are approximately those of a highly coherent stepped frequency source. Means are provided for monitoring the magnetron's tuning piston position read-out voltage and for triggering the pulse forming network associated with the magnetron at the occurrence of each one of a set at a predetermined read-out voltage levels. A feedback loop is utilized to determine the difference between the frequencies of the actual output pulses of the magnetron and a set of precise, stepped reference frequencies. Frequency correction values are generated and are utilized to generate a new set of magnetron read-out voltage levels at which the pulse forming network is to be triggered.

Frequency correction is achieved using a frequency synthesizer which generates signals having frequencies which are caused to coincide with frequencies generated by the magnetron.

From EP-A-0276885, there is known a radar system comprising a transmitter with a periodically tunable magnetron and a receiver with a mixing stage, in which echo pulses caused by transmitted radar pulses are mixed with the output signal from a local oscillator, whose frequency can be controlled. During transmission, the tuning frequency of the magnetron is varied periodically and, in an interval before triggering, the local oscillator is "slaved" to the magnetron, so that the local oscillator frequency follows the variations in the tuning frequency. In the triggering instant the local oscillator is locked in frequency to the value prevailing in the triggering instant This system is combined with a frequency predicting circuit which consists principally of a comparator in which the control signal of the local oscillator, which due to the "slaving" represents the instantaneous tuning frequency, is compared with a reference signal. The transmitter tube is triggered when the two compared signals are equal.

From US-A-4682178 there is known a coherent radar, ie. a radar in which the operation is based on control of the phases of transmitted and received echo signals, which comprises a magnetron, a modulator for pulsed driving the magnetron, a stable local oscillator and mixer for producing an intermediate frequency signal of incoming echoes, and an intermediate frequency oscillator and phase sensitive detector for detecting the echo pulses in order to generate a so-called bipolar video signal. An HF signal derived from the stable oscillator is fed to the tuning cavities of the magnetron, so-called priming, at least in the transmission moment, and the modulator and the intermediate frequency oscillator are mutually time controlled in such a manner that the leading edge of the modulator pulse and thereby of the magnetron pulse always appears in a given phase position of the output signal from the intermediate frequency oscillator. This reference therefore does not relate to non-coherent radars of the type with which the present invention is concerned wherein phases of the various signals are not involved.

One object of the present invention is to increase the quantity of information and the reliability of the radar system so as to allow the possibility of fast conversion (during one period of magnetron pulse repetition) from operation with a frequency varying from pulse to pulse to operation at one or a few fixed frequencies and back.

In accordance with the present invention, there is provided a pulse radar system comprising:-
a tuned magnetron;
an input for feeding voltage to the tuned magnetron;
a modulator connected to the magnetron for pulsing a feeding voltage to the magnetron;
a low power microwave signal source which radiates signals of frequencies fixed during each period of magnetron pulse repetition and differing from frequencies of corresponding signals generated by the magnetron, the source being connected to the magnetron to send signals to the magnetron in pauses between pulses of the magnetron; and
a signal converter, connected to the modulator and arranged to receive said signals from the low power microwave signal source after said signals are reflected by the magnetron and to convert these signals into further signals connected in time to instants at which the frequencies of said low power source and the oscillating frequency of the magnetron coincide, said further signals being used for triggering the modulator.

One embodiment of the pulse radar system designed for reception of the signal reflected from the target also includes a receiver for processing these signals and an antenna connected to the receiver and receiving said signals.

Another embodiment of the radar system, designed for both radiation and reception of the signal, differs from the previous embodiment in that the receiver is connected to said low power microwave signal source to transfer synchronizing signals to said source for switching its frequencies.

A further embodiment differs from the two previous embodiments in that the receiver is connected in addition to said low power microwave signal source, which, in this case, is also a local oscillator of the receiver and provides its signals to the receiver.

Other embodiments are also possible which permit an increase in information and in the reliability of the radar system.

Embodiments of the present radar system structure can provide essential advantages over the known systems in that, for example:
the radar system radiates a signal of predetermined frequency, which may be an independent source of information;
the radiated frequency is conditional only on the frequency of the low power microwave signal source and may be shifted easily from pause to pause between pulses by an arbitrary, for example, random law or, if necessary, may be maintained constant;
the radiated frequency does not depend on destabilizing factors, shifts of tuning rate, or the transition to working at a fixed frequency and back. This increases the information obtained by the present radar system thanks to the use of an exact predetermined frequency as an additional source of information and achieves a considerable increase in the reliability of the radar system by means of fast transition from one regime of operation to another;

It is possible very simply, for instance, by shifting the feeding voltage of the tuner of the magnetron, that is by shifting the rate of tuning, at the same time, to shift the disposition of pulses. This increases the quantity of the information and also the reliability of the radar system.

The invention is described further hereinafter, by way of example only, with reference to the accompanying drawings, in which:-
Fig. 1 is a block diagram illustrating one possible embodiment of a radar system in accordance with the present invention designed only for the radiation of signals; and
Fig. 2 is a block diagram illustrating another possible embodiment of a radar system in accordance with the present invention designed for both the radiation and reception of signals.

Many embodiments of the present invention are possible. Some are considered hereinafter.

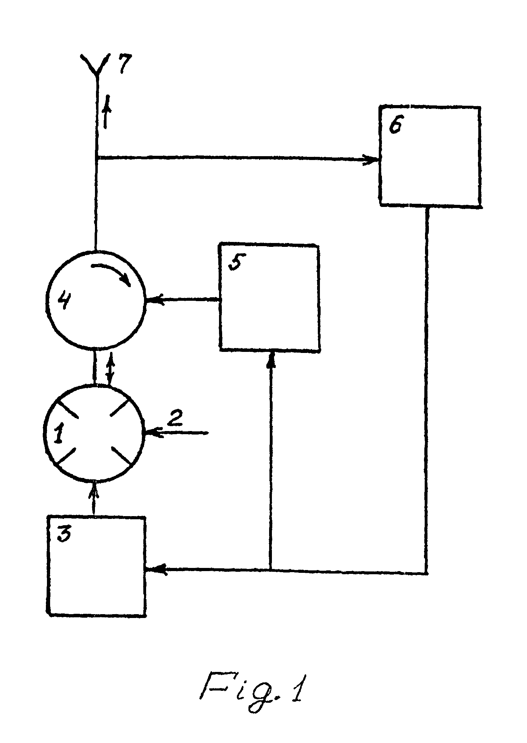

The radar system shown in Fig. 1 and designed only for the radiation of the signal comprises: a tuned magnetron 1, an input 2 for providing a feeding voltage of a magnetron tuner, a modulator 3 connected to the magnetron and forming feeding voltage pulses for the magnetron, a circulator 4 connecting the magnetron 1 and a low power microwave signal source 5 whose signals are fed to the magnetron in pauses between pulses and have frequencies fixed during each period of magnetron pulse repetition and differing from frequencies of the corresponding signals generated by the magnetron, a signal converter 6 which can receive said low power signals reflected by the magnetron and convert these signals into signals connected in time to the instants when the frequencies of said low power source 5 and the oscillating system of the magnetron 1 coincide with each other, the latter signals being used for triggering the modulator 3 connected to said signal converter 6.

Besides that, in the present embodiment of the radar system, the converter 6 is connected to the low power source 5 to synchronize the switching of frequencies of the source 5, the triggering of the modulator 3, and, therefore, the radiation of signals from the radar system by the magnetron 1 which is connected to the antenna 7 and which radiates the output signals of the radar system.

However, it is possible to envisage embodiments of the present radar system in which the circulator, the antenna and the connection of the signal converter 6 to the source 5 are absent in so far as the source 5 can be connected to the magnetron directly, for example, through an additional input of the magnetron. Furthermore, an antenna can be omitted because the magnetron or one of outputs of the circulator can radiate a signal directly, without the need of an antenna. Also, the connection of the signal converter 6 to the source 5 can be replaced by successive autonomous switching of frequencies of the source without a synchronization of said signal or by means of another signal, for example, a pulse of the magnetron as the signal of synchronization. It is also possible to envisage further embodiments of the present radar system operating only for the emission of radiation.

If we add a receiver of signals reflected from a target with its own receiving antenna to the radar system shown in Fig. 1, we arrive at an embodiment of the present invention designed for both the radiation and reception of signals of the radar system.

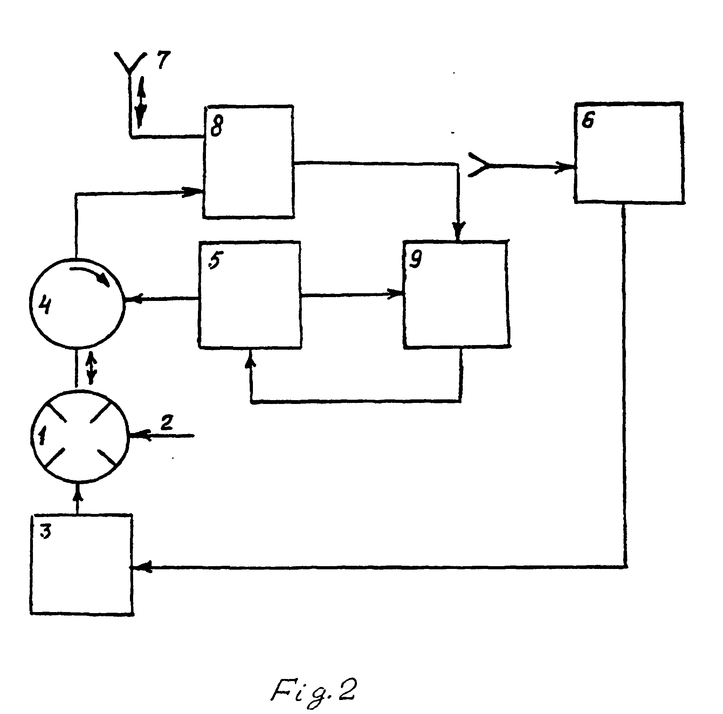

However, separate antennas for radiation and reception are rather seldom employed in one radar system, and therefore we shall consider in more details the radar system having one antenna for both radiation and reception of the signal shown in Fig. 2. The radar system comprises: a tuned magnetron 1, an input 2 for giving a feeding voltage of a magnetron tuner, a modulator 3 connected to the magnetron and forming feeding voltage of a magnetron tuner, a low power microwave signal source 5 connected to the magnetron and giving its signals to the magnetron through a circulator 4 in pauses between pulses, and having the frequencies fixed during each period of magnetron pulse repetition and differing from the frequencies of the correspondent signals generated by the magnetron, a signal converter 6 which can receive said low-power signals reflected from the magnetron 1 and convert these signals into signals connected in time to the instants, when the frequencies of said low power source 5 and the oscillating system of the magnetron 1 coincide with each other, and used for triggering the modulator 3 connected to said signal converter 6. Additionally, this embodiment of the radar system comprises: an antenna 7 to radiate signals and to receive the signals reflected from a target, a duplexer 8 connecting the antenna to a receiver 9 connected twice to the low power source 5. The first connection provides for the use of the low-power source 5 as a local oscillator for the receiver. The second connection provides an entrance for the synchronizing signal from the receiver 9 to the source 5 for switching its frequencies. The source 5, in that case, can be placed both in the transmitter and in the receiver of the radar system. At the same time, the magnetron 1 is also connected to the converter 6 through the duplexer 8. It is necessary to say, the connection of the magnetron 1 to the converter 6 must without fail not be fulfilled as an unbroken transmission line. The signal reflected from the magnetron can be received by the converter after passing the duplexer as that shown in Fig. 2, by means of an additional antenna, for example, a megaphone antenna placed near one of the waveguide connections, thereby enabling simplification of the design of the radar system.

It is normally necessary that the modulator 3, the low power source 5 and the receiver 9 have their own power supplies. However, it is possible that other embodiments may have joint or separate external power supplies for these elements.

The operation of the present embodiments of the radar system is now considered. The operation of the radar system shown in Fig. 1 begins by switching on the modulator 3 and providing a feeding voltage to an input 2 of the magnetron tuner. Then, the low power microwave signal source 5 is switched on and its fixed frequency signal passes to the magnetron through the circulator 4, reflects from the magnetron and passes to the signal converter 6. Then, when the resonant frequency of the oscillating system of the magnetron coincides with the frequency of the microwave signal source 5, the signal reflected from the magnetron decreases in amplitude. This allows conversion of the signal reflected from the magnetron into a signal to trigger the modulator 3, connected in time to the instant when the frequencies of the low power source 5 and the oscillating system of the magnetron coincide with each other. On receiving the trigger signal, the modulator 3 forms the feeding voltage pulse for the magnetron 1, which then radiates a power microwave frequency signal towards a target through the antenna 7. Simultaneously with triggering the modulator 3, the signal switches, if necessary, the frequency of the low power source 5. A new cycle of operation of the radar system then initiates the search for the coincidence of the frequencies of the oscillating system of the magnetron and the low power source 5.

The frequency of the signal radiated by the radar system is not affected by destabilizing influences and is conditional only on the frequency of the low power source 5 and the difference between the frequency of the oscillating system of the magnetron and the corresponding frequency generated by the magnetron. Advantages of the radar system remain for operation at a fixed frequency because the frequency is maintained very stably in the presence of destabilizing influences.

Operation of the radar system designed for the radiation and reception of a signal and having a signal receiver, which is not connected to the other parts of the radar system and has its own receiving antenna, repeats the above-described operation exactly, with single difference that, after the radiation of the signal by the radar system and its reflection from a target, the signal is received by the receiving antenna and passes in via the receiver 9, where it is amplified. The results of this processing are given a indicator or may be employed in a different way.

All advantages of the present radar system are retained in this case.

Operation of the radar system shown in Fig. 2 and having a common radiating and receiving antenna begins by switching on the modulator 3 and the receiver 9 and providing a feeding voltage to an input 2 of the magnetron tuner, and switching on the low power microwave signal source 5. In this case, the frequency of the oscillating system of the magnetron begins to change by a periodical law, and a fixed frequency signal of the low power source 5 passes through a circulator 4 to the magnetron 1 and reflects from it. The signal reflecting from the magnetron decreases in amplitude rapidly because of a change in resistance of the magnetron at the resonant frequency of its oscillating system.

The signal reflecting from the magnetron and having a frequency predetermined by the source 5 passes through the duplexer 8 to the signal converter, which converts that signal into the signal connected in time to the instant, when the frequencies of the low power source 5 and the magnetron oscillating system coincide with each other, and switches on the modulator 3.

Receiving the triggering signal, the modulator 3 forms a voltage pulse for the magnetron 1, which generates a power microwave frequency signal, which arrives at the antenna 7 through the circulator 4 and the duplexer 8.

The microwave frequency signal pulse is radiated by the antenna 7, is reflected by a target and, thus, arrives back at the antenna 7 again. The received signal from the antenna 7 is passed to the receiver 9 via the duplexer 8. The received signal is amplified in the receiver 9 and the processing results are provided at the indicator or may be employed in a different way. To amplify the signal, either a local oscillator of the receiver or said low power source 5 as shown in Fig. 2 are used. After the processing of the received signal, the receiver 9 provides a synchronizing signal to the low power source 5 for switching its frequency. A new cycle of operation of the radar system then beings by switching the frequency of the source 5 and searching for coincidence between its frequency and the frequency of the magnetron oscillating system.

## Claims

1. A pulse radar system comprising:-
a tuned magnetron (1);
an input (2) for feeding voltage to the tuned magnetron (1);
a modulator (3) connected to the magnetron (1) for pulsing a feeding voltage to the magnetron (1);
a low power microwave signal source (5) which radiates signals of frequencies fixed during each period of magnetron pulse repetition and differing from frequencies of corresponding signals generated by the magnetron (1), the source (5) being connected to the magnetron (I) to send signals to the magnetron in pauses between pulses of the magnetron; and
a signal converter (6), connected to the modulator (3) and arranged to receive said signals from the low power microwave signal source (5) after said signals are reflected by the magnetron and to convert these signals into further signals connected in time to instants at which the frequencies of said low power source (5) and the oscillating frequency of the magnetron (1) coincide, said further signals being used for triggering the modulator (3).

2. A pulse radar system according to claim 1, including a receiver (9) for processing signals reflected from a target and an antenna (7) connected to the receiver (9) and receiving said signals.

3. A pulse radar system according to claim 2, wherein the receiver (9) is connected to said low power microwave signal source (5) to transfer synchronizing signals to said source (5) for switching its frequencies.

4. A pulse radar system according to claim 2 or claim 3, wherein the receiver (9) is connected also to said low power microwave signal source (5), which, in this case, is a local oscillator of the receiver (9) and gives its signals to the receiver.

## Patentansprüche

1. ^{.} Pulsradarsystem, das Folgendes umfasst:
ein abgestimmtes Magnetron (1);
einen Eingang (2) zum Anlegen von Spannung an das abgestimmte Magnetron (1);
einen Modulator (3), der mit dem Magnetron (1) zum Pulsieren einer Speisespannung zu diesem verbunden ist;
eine Niedrigleistungs-Mikroweltensignalquelle (5), die Signale mit Frequenzen ausstrahlt, die während jeder Magnetronimpulswiederholperiode fest sind und sich von Frequenzen von entsprechenden Signalen unterscheiden, die von dem Magnetron (1) erzeugt werden, wobei die Quelle (5) mit dem Magnetron (1) verbunden ist, um Signale in Pausen zwischen Impulsen des Magnetrons zu diesem zu senden; und
einen Signalkonverter (6), der mit dem Modulator (3) verbunden ist und die Aufgabe hat, die genannten Signale nach ihrer Reflexion von dem Magnetron von der Niedrigleistungs-Mikrowellensignalquelle (5) zu empfangen und diese Signale in weitere Signale zu konvertieren, die zeitlich mit Momenten verbunden sind, in denen die Frequenzen der genannten Niedrigleistungsquelle (5) und die Osziallationsfrequenz des Magnetrons (1) zusammenfallen, wobei die genannten weiteren Signale zum Triggern des Modulators (3) verwendet werden.

2. Pulsradarsystem nach Anspruch 1, das einen Empfänger (9) zum Verarbeiten von Signalen, die von einem Target reflektiert werden, und eine Antenne (7) aufweist, die mit dem Empfänger (9) verbunden ist und die genannten Signale empfängt.

3. Pulsradarsystem nach Anspruch 2, wobei der Empfänger (9) mit der genannten Niedrigleistungs-Mikrowellensignalquelle (5) verbunden ist, um Synchronisationssignale zu der genannten Quelle (5) zum Umschalten ihrer Frequenzen zu übertragen.

4. Pulsradarsystem nach Anspruch 2 oder Anspruch 3, wobei der Empfänger (9) auch mit der genannten Niedrigleistungs-Mikrowellensignalquelle (5) verbunden ist, die in diesem Fall ein Lokaloszillator des Empfängers (9) ist und ihre Signale zu dem Empfänger leitet.

## Revendications

1. Un système radar à impulsions comprenant :
un magnétron accordé (1) ;
une entrée (2) pour alimenter en tension le magnétron accordé (1) ;
un modulateur (3) raccordé au magnétron (1) pour impulser une tension d'alimentation vers le magnétron (1) ;
une source de signal micro-onde basse tension (5) qui rayonne des signaux de fréquences fixées au cours de chaque période de répétition d'impulsion du magnétron et différant des fréquences des signaux correspondants générés par le magnétron (1 ), la source (5) étant raccordée au magnétron (1) de façon à envoyer des signaux au magnétron pendant les pauses entre les impulsions du magnétron ; et
un convertisseur de signal (6), raccordé au modulateur (3) et agencé de façon à recevoir lesdits signaux de la source de signal micro-onde basse tension (5) après que lesdits signaux aient été réfléchis par le magnétron et de façon à convertir ces signaux en signaux supplémentaires reliés temporellement à des instants auxquels les fréquences de ladite source basse tension (5) et la fréquence d'oscillation du magnétron (1) coïncident, lesdits signaux supplémentaires étant utilisés pour déclencher le modulateur (3).

2. Un système radar à impulsions selon la Revendication 1, incluant un récepteur (9) pour le traitement des signaux réfléchis par une cible et une antenne (7) raccordée au récepteur (9) et recevant lesdits signaux.

3. Un système radar à impulsions selon la Revendication 2, où le récepteur (9) est raccordé à ladite source de signal micro-onde basse tension (5) pour transférer des signaux de synchronisation à ladite source (5) pour commuter ses fréquences.

4. Un système radar à impulsions selon la Revendication 2 ou 3, où le récepteur (9) est raccordé également à ladite source de signal micro-onde basse tension (5), qui, dans ce cas, est un oscillateur local du récepteur (9) et transmet ses signaux au récepteur.
